# EUROPÄISCHE PATENTANMELDUNG

(11) **EP 1 477 882 A2**
(43) Veröffentlichungstag der Anmeldung: **17.11.2004**
(21) Anmeldenummer: 04101386.3
(22) Anmeldetag: 02.04.2004
(51) Int. Cl.: G06F 1/00

(54) **Dezentrales, tokenbasiertes Accountingsystem für autonome, verteilte Systeme**

(30) Priorität: 04.04.2003 DE 10315756
(71) Anmelder: Technische Universität Darmstadt, 64283 Darmstadt (DE)
(72) Erfinder: Liebau, Nicolas Christopher, 64283 Darmstadt (DE); Darlagniannis, Vasilios, 64289 Darmstadt (DE); Mauthe, Andreas Ulrich, Dr., 64289 Darmstadt (DE)
(74) Vertreter: Weber, Dieter, Dr.

(57) **Zusammenfassung**

Die vorliegende Erfindung betrifft ein Verfahren in der Datenverarbeitung zur Buchführung und Abrechnung von Ressourcen- und Dienstnutzung in verteilten, autonomen Computernetzwerken basierend auf Token und verteilter Kryptographie, wobei die Token eine eindeutige Identifikation besitzen. Um ein dezentrales, skalierbares Accountingsystem für verteilte, dezentrale Computernetzwerke, wie z.B. Peer-to-Peer-Systemen, zur Verfügung zu stellen, wird erfindungsgemäß vorgeschlagen, daß die Buchführung und Abrechnung dezentral erfolgt, die Token auf einen bestimmten Teilnehmer ausgestellt werden und eine eindeutige Identifikation besitzen, die Token nur vom Eigentümer gegen Ressourcen- oder Dienstnutzung eingetauscht werden dürfen, ein Teilnehmer fremde Token gegen eigene Token bei Super-Peers eintauschen kann, neue Token mit einem verteilten, geheimen privaten Schlüssel dezentral von mindestens einem Super-Peer signiert werden.

## Beschreibung

Die Erfindung betrifft ein Buchführungs- bzw. Accountingsystem entsprechend dem Oberbegriff des Anspruchs 1.

Um in dezentralen Computernetzwerken irgendeine Form von globalen Regelungsmechanismen zu implementieren, wird ein Accountingsystem benötigt. Dieses System sollte es ermöglichen, vertrauenswürdige Informationen über Transaktionen und Ressourcennutzung der einzelnen Teilnehmer (Peers) bereitzustellen und auf dieser Basis Regelungsmechanismen, wie z.B. Marktmechanismen, zu nutzen.

### Stand der Technik

Verteilte, dezentrale, autonome Computersysteme, wie z.B. Peer-to-Peer-Systeme, haben aufgrund ihres dezentralen Charakters einige Vorteile: Sie sind robust gegenüber Angriffen wie Denial-of-Service-Attacks, und können auf sehr kostengünstige Art und Weise eine große Anzahl von Computernutzer verknüpfen. Der Grund hierfür liegt im Fehlen einer zentralen administrativen Instanz. Dadurch ergibt sich aber auch der Nachteil, dass viele technischen Lösungen aus Client-Server-Umgebungen nicht übernommen serden können. So existieren heute keine geeigenten Abrechnungmechanismen für Peer-to-Peer-Systeme, die die Nutzung und Bereitstellung von Diensten und Ressourcen transparent machen. Ohne diese Informationen können Peer-to-Peer-System in vielen Bereichen nicht angewendet werden (siehe auch [Dingledine2001]).

Ansätze für eine Lösung finden sich zum Beispiel bei eMule (siehe http://emule-project.net), einer Peer-to-Peer-Filesharing Anwendung. Die Peers sammeln Informationen über ihr Upload/Download-Verhältnis mit anderen Peers. Dieses Verhältnis hat dann einen Einfluss auf die Position des anderen Peers in der eigenen Warteschlange. Auf diese Weise ist aber nicht festzustellen, wieviel Dienste und Ressourcen ein Peer insgesamt von der Peer-to-Peer-Gemeinschaft bezogen und wieviel er selber geleistet hat.

Ein Ansatz mit verteilten Konten findet sich in [Vishnumurthy2003]. Hier wird über die Ressourcennutzung und die Ressourcenbereitstellung für jeden Teilnehmer Buch geführt. Für jeden Teilnehmer existiert auf einer Gruppe weiterer Peers ein Konto, dass den Kontostand für einen bestimmten Peer enthält. Der Kontostand erhöht sich mit Ressourcenlieferung des Kontoinhabers und verringert sich mit Ressourcennutzung des Kontoinhabers. Die Lokalisierung des Kontos auf fremden Peers sichert die Vertrauenswürdigkeit des Kontostands.

### Aufgabe der Erfindung

Aufgabe der Erfindung ist es, ein dezentrales, skalierbares Accountingsystem für verteilte, dezentrale Computernetzwerke, wie z.B. Peer-to-Peer-Systemen, zur Verfügung zu stellen. Mit Hilfe des Accountingsystems soll es ermöglicht werden, Regelungsmechanismen für die Nutzung von Ressourcen, wie Rechenzeit und Bandbreite, und die Nutzung von Diensten in diesen Systemen anzuwenden.

### Lösung der Aufgabe

Diese Aufgabe wird durch ein Verfahren mit den Merkmalen aus Anspruch 1 gelöst.

### Vorteile der Erfindung

Das Verfahren stellt eine einfache, skalierbare und dezentrale Alternative dar, um aggregierte Accounting-Informationen über einen Peer systemweit abzubilden und zur Verfügung zustellen. In verteilten, dezentralen Systemen wird es so ermöglicht eine Aussage zu treffen, wie viel ein Teilnehmer von verteilten Ressourcen und verteilten Diensten genutzt und wie viel er selber zur Verfügung gestellt hat. Die Skalierbarkeit wird erreicht, indem für Transaktionen selber keine zusätzliche Kommunikation mit Dritten stattfinden muss. Vertrauen in das System wird durch die Verwendung eines verteilten Kryptographieschemas erreicht.

Es ist möglich, die Token speziell auf eine Gruppe auszustellen oder sie allgemein zu halten, um Interoperabilität zwischen verteilten Anwendungen zu ermöglichen.

Aufgrund einer flexiblen Aggregationsfunktion kann das Accountingsystem für eine Vielzahl möglicher Szenarien eingesetzt werden. So können die Token entweder im Rahmen eines Anreizsystems, als virtuelle Währung, oder als Quittung für abgewickelte Transaktionen oder genutzte Ressourcen verwendet werden.

Weiterhin wird ein vertrauenswürdiger Austausch von Token und Dienstleistung unterstützt, bei dem der Erstleistende nicht das Risiko eines Verlusts eingeht, weil der Zweitleistende seine Leistung stoppt, sobald er die Gegenleistung voll erhalten hat.

Der Accounting-Mechanismus erlaubt auch die die Vergabe von Krediten. Dabei können Peers anderen Peers eine bestimmte Anzahl von Token zur Verfügung stellen. Die Rückzahlungsmodalitäten können frei festgelegt werden.

Jeder Peer kann dem Verlust von Token vorbeugen, indem er Sicherheitskopien der Token anlegt.

Ein weiterer Vorteil des Systems ist, das Token nicht gestohlen werden können.

Die Lösung des Problems ist unabhängig von benutzten Netzwerkprotokollen, Hardware und Betriebssystemen.

### Beschreibung von Ausführungsbeispielen

Für die Beschreibung des Accountingsystems werden folgende Begriffe verwendet:
- Peer: Ein autonomer Computer, auf dem eine verteilte, dezentrale (Peer-to-Peer) Anwendung läuft, die das Accountingsystem benutzt.
- Leistender Peer: Der Peer, der in einer Transaktion einen Dienst leistet, also z.B. Rechenzeit zur Verfügung stellt oder eine Datei versendet.
- Beziehender Peer: Der Peer, der einen Dienst von einem anderen Peer bezieht, also z.B. eine angefragte Datei von dem leistenden Peer zugeschickt bekommt.
- Super-Peer: Peers, die dazu ausgewählt wurden, spezielle, für das Accountingsystem notwendige, administrative Aufgaben zu übernehmen. Jeder Super-Peer besitzt einen Teil eines verteilten privaten Schlüssels. (Verschlüsselungsverfahren, die auf dem RSA-Algorithmus beruhen, sind hierfür gut geeignet.)
- Token: Ein Token repräsentiert ein Accounting-Objekt. Er ist die Einheit für Accounting-Ereignisse. Ein Token hat eine festgelegte Datenstruktur. Diese enthält eine eindeutige Identifizierung, eine elektronische Signatur (um Fälschungssicherheit zu gewährleisten), sowie weitere Accounting-Informationen.

### Beschreibung des Accountingsystems

Jeder Peer besitzt ein Konto lokal auf seinem Computer, das seine Token enthält. Ein Token repräsentiert eine Ressourcen- oder Dienstnutzung, über die das Accountingsystem buchführt. Möchte ein Peer (beziehender Peer) einen Dienst von einem anderen Peer (leistender Peer) beziehen, so muss der beziehende Peer eine bestimmt Anzahl Token als Gegenleistung dem leistenden Peer übertragen. Besitzt ein Peer keine Token mehr, kann er keine weiteren Dienste beziehen. Ein Peer muss deshalb selber Dienste leisten, um fremde Token zu sammeln. Ein Konto wird als Datenbank mit zwei Tabellen implementiert. Eine Tabelle enthält die eigenen Token des Peers und die andere Tabelle die fremden Token, die der Peer erhalten hat.

Token werden nur auf einen bestimmten Peer ausgestellt. Das heißt, dass nur der Eigentümer einen Token ausgeben kann. Fremde Token müssen im so genannten Tokenaggregationsprozess gegen eigene Token eingetauscht werden. Der Grund für diesen Mechanismus ist, dass ansonsten Betrug durch doppeltes Ausgeben von Token keine Grenzen gesetzt werden können.

### Tokenaggregationsprozess

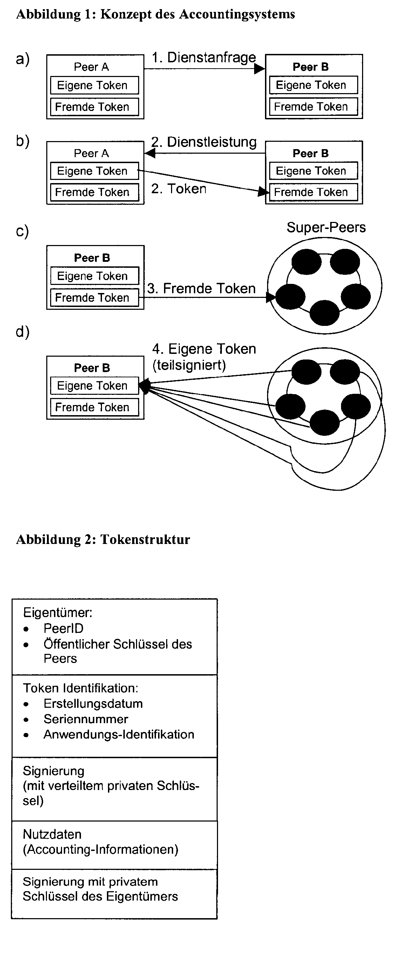

Der Tokenaggregationsprozess tauscht Token gegen neue, auf einen bestimmten Peer ausgestellte, Token ein (siehe Abbildung 1).

Ein Peer "A" hat eine bestimmt Anzahl fremde Token N für geleistete Dienste erhalten (vgl. Abbildung 1 a) und b) ). Nun möchte er diese fremden Token gegen eigene eintauschen. Dazu kontaktiert er einen Super-Peer und übersendet ihm die gesammelten Token (vgl. Abbildung 1 c) ). Der Super-Peer bestimmt nun aufgrund der Aggregierungsfunktion x = f(N) wie viele neue Token der Peer erhält. Der Super-Peer erstellt die neuen Token und veranlasst die Signierung der Token. Dazu verschickt der Super-Peer die neu erstellten Token an weitere Super-Peers. Diese Super-Peers unterzeichnen die neuen Token mit ihrem Teil des geheimen, verteilten, privaten Schlüssels. Der ursprünglich kontaktierte Super-Peer kann ebenfalls Token teilsignieren, muss dies aber nicht. Diese so teilweise signierten Token werden ohne Umwege an den Peer "A" zurückgesendet. Peer "A" fügt nun die teilsignierten Token zu kompletten Token zusammen (vgl. Abbildung 1 d) ). Die hierfür benötigten Mechanismen stellt z.B. die RSA-Threshold-Kryptographie zur Verfügung. Siehe dazu z.B. [Shamir1979], [Zhou2000].

Da die Aggregationsfunktion öffentlich ist, besteht auch die Möglichkeit, dass der einreichende Peer bereits die Token erstellt und die Super-Peers lediglich die Anzahl Token auf Richtigkeit überprüfen und anschließend (teil-)unterzeichen und an das Peer zurücksenden. Weiterhin kann so die Arbeit der Super-Peers nachvollzogen und überwacht werden.

### Tokenstruktur

Die Struktur eines Token zeigt Abbildung 2. Ein Token kann aufgrund der Informationen über Eigentümer und Erstellungsdatum und Seriennummer eindeutig identifiziert werden. Weiterhin kann er nicht gefälscht werden, da diese Informationen mit einem geheimen Schlüssel signiert wurden. Es ist möglich, zur Identifizierung eine Anwendungsidentifikation anzugeben. So kann das gleiche Accountingsystem in derselben Nutzergruppe gleichzeitig für verschiedene Anwendungen verwendet werden.

Neben den Informationen über den Eigentümer und die ldentifikationsmerkmale weist die Datenstruktur des Token die Signaturen der Super-Peers und des Eigentümers auf.

Ein weiterer Datenblock eines jeden Token steht für Nutzdaten zur Verfügung. Die Nutzdaten können so unterschiedliche Informationen enthalten, wie die Art des geleisteten Dienstes, den Wert des geleisteten Dienstes, die Geschwindigkeit des geleisteten Dienstes oder die Identifikation des Empfängers. Die Nutzdaten ermöglichen es, die Token auch zur Buchführung und Abrechnung höherwertiger Dienste zu verwenden.

Ein Beispiel für solche höherwertigen Dienste sind die Dienstleistungen von Ärzten oder medizinischen Labors innerhalb eines staatlichen Gesundheitssystems. Erbringt ein Labor innerhalb des Systems eine Dienstleitung, so erhält es von dem die Leistung beziehenden Arzt einen Token, der als Nutzdaten die Angabe der Dienstleistung erhält. Diese Informationen können dann im Rahmen des Aggregationsprozesses zur Wertbestimmung des Token herangezogen werden, so dass das Labor für den Token des Arztes von den Super-Peers eine dem Wert der erbrachten Leistung entsprechende Anzahl von eigenen Token oder eine entsprechende Vergütung von einer Krankenkasse erhalten kann.

Entgegen den aus dem Stand der Technik bekannten Systemen sind die Token des erfindungsgemäßen Accountingsystems nicht mit einem vorbestimmten Wert versehen (vergleichbar mit Bargeld), sondern erlauben die flexible Buchhaltung und Abrechnung von Dienstleistungen und Waren.

### Entdeckung/Vermeidung des mehrfachen Ausgebens eines Token

Die eindeutige Tokenidentifikation ist wichtig, um das doppelte Ausgeben eines Token entdecken zu können oder um es zu verhindern. Zu dem Accountingsystem gehören zwei unterschiedliche Mechanismen, die das doppelte Ausgeben von Token betreffen.

Der erste Mechanismus ermöglicht das Auffinden von doppelt ausgegebenen Token. Dazu tauschen die Super-Peers Informationen über die Token aus, die sie zur Aggregation erhalten haben. Hat ein Peer (betrügender Peer) einen Token in verschiedenen Transaktionen mehrfach verwendet, so wird dieser Token auch mehrfach zur Aggregation eingereicht. Die Zeitpunkte hiervon kann der betrügende Peer nicht beeinflussen. Super-Peers erkennen so, dass ein Token bereits zur Aggregation eingereicht wurde. Aufgrund der Informationen, die der Token enthält, können sie den betrügenden Peer eindeutig identifizieren. Dieser kann dementsprechend bestraft werden.

Damit jeder Peer entdecken kann, ob es selber einen Token mehrfach erhält, hält es eine Kopie aller fremden Token auch nach einem Tokenaggregierungsprozess. Um nicht alle jemals erhaltenen Token speichern zu müssen, haben Token nur eine bestimmte Gültigkeitsdauer. Diese ist systemweit einheitlich. Da jeder Token das Ausgabedatum enthält, kann leicht überprüft werden, ob ein Token noch gültig ist oder nicht. Ungenutzte, abgelaufene Token können im Tokenaggregationsprozess gegen neue Token eingetauscht werden.

Der zweite Mechanismus verhindert das doppelte Ausgeben von Token. Dazu werden für jeden Peer zusätzliche Konten auf anderen, entfernten Peers angelegt. Diese Konten existieren auf mehren Peers, da so die Verfügbarkeit erhöht wird. Wo die Konten platziert werden, wird z.B. durch eine Distributed Hash Table bestimmt. Diese Konten enthalten eine Liste der auf den Peer ausgestellten Token und werden deshalb im Folgenden als "Listenkonten" bezeichnet. Mit jedem Tokenaggregationsprozess meldet das Super-Peer die für das Peer neu erstellten Token mit voller Identifikation an das Listenkonto. Die das Listenkonto führenden Peers tragen die Token in die Liste des Listenkontos ein. Möchte Peer "A" einen Dienst von Peer "B" beziehen, so nennt Peer "A" die Token, die es plant für den Dienst auszugeben. Der Peer "B" fragt nun bei einem der Peers, die das Listenkonto für Peer "A" führen, an, ob die entsprechenden Token noch nicht ausgegeben wurden. In diesem Moment werden diese Token in der Liste als "ausgegeben" markiert. Nun wickeln Peer "A" und Peer "B" die Transaktion ab. Peer "B" wird nur die nachgefragten Token akzeptieren. Er wird später die erhaltenen Token in einem Aggregationsprozess gegen eigene Token eintauschen. Dabei meldet der Super-Peer die eingetauschten Token an die listenführenden Peers. Diese streichen nun die Token endgültig aus dem Listenkonto. Auf diese Weise ist gewährleistet, dass alle nicht markierten Token einer Liste tatsächlich existent sind und noch nicht ausgegeben wurden.

Da die Listenkonten auf anderen Peers entfernt platziert sind und das Verhalten dieser Peers nicht beeinflusst werden kann, können alle Listenkonten eine Peers temporär nicht erreichbar sein oder endgültig verloren gehen. Transaktionen können aber nach wie vor durchgeführt werden, allerdings sind Listenoperationen temporär nicht möglich, bis die Listenkonten wieder verfügbar sind oder neu angelegt wurden. Der Eigentümer-Peer wird über solche Zustände nicht informiert. Er muss also immer annehmen, dass mehrfaches Ausgeben eines Token sofort erkannt würde.

### Vertrauenswürdiger Abwicklungsprozess

Das beschriebene Gesamtsystem ermöglicht eine Abwicklung von Transaktionen, bei der die beteiligten Parteien darauf vertrauen können, dass die jeweils andere Partei ihren Teil der Abmachung auch liefert. Dazu besitzt jeder Peer ein eigenes Schlüsselpaar aus privatem und öffentlichem Schlüssel. Vor einer Transaktion tauschen die beiden Parteien die öffentlichen Schlüssel aus.

Jeder Peer signiert seine Token mit seinem privaten Schlüssel, bevor er sie an den Empfänger schickt. Damit wird zum einen die Richtigkeit der Nutzdaten bestätigt. Die Daten können auch nicht mehr verändert werden (siehe Abbildung 2). Zum anderen werden nur Tokens, die vom Eigentümer signiert wurden, zur Tokenaggregation zugelassen.

Mit diesen Voraussetzungen führt der folgende Ablauf zu einem vertrauenswürdigen Austausch von Dienst gegen Token. Normalerweise besteht die Gefahr, dass die Seite, die als zweite liefern sollte, ihre Leistung einfach einstellt, sobald sie die komplette Gegenleistung erhalten hat. Der vertrauenswürdige Abwicklungsprozess sieht vor, dass zuerst der beziehende Peer seinen unsignierten Token an den leistenden Peer sendet. Nachdem der leistende Peer seinen Dienst für diesen Token erbracht hat, sendet der beziehende Peer die Signatur des Token an den leistenden Peer. Stoppt der leistende Peer seinen Dienst vorher, ist er in besitzt eines unvollständigen Token, den er nicht zur Tokenaggregation einreichen kann. Versendet der beziehende Peer nicht die Signatur des Token, so wird der Token aber trotzdem im Listenkonto (s.o.) als ausgegeben markiert und kann so nicht nochmals benutzt werden. Beide Partner haben so keinen Anreiz mehr, den anderen Partner zu betrügen. Zusammengefasst läuft der vertrauenswürdige Abwicklungsprozess wie folgt ab:
1. Austausch der öffentlichen Schlüssel
2. Beziehender Peer sendet unsignierten Token
3. Leistender Peer sendet Dienst
4. Beziehender Peer sendet Nutzdaten und Signatur

### Vermeidung weiterer Betrugsversuche

Betrugsversuche, abgesehen vom bereits behandelten mehrfachen Ausgeben von Token, sind im Accountingsystem kaum möglich. So können z.B. Token nicht gestohlen werden, da sie auf den Eigentümer ausgestellt sind und von ihm unterzeichnet werden müssen, bevor sie für einen anderen Peer einen Wert darstellen. In den Nutzdaten wird dazu auch der Empfänger-Peer eingetragen. Nur die wirklichen Empfänger können Token zum Tokenaggregationsprozess einreichen. Auch während dem Erstellungsprozess von neuen Token können Super-Peers ihre Position nicht ausnutzen, um unrechtmäßig an zusätzliche Token zu gelangen.

### Auswahl der Super-Peers zur gemeinsamen Signierung der Token

Um eine Kollaboration der Super-Peers zu vermeiden, werden diese für jeden Tokenaggegationsprozess zufällig ausgewählt. Wie viele Super-Peers einen Token signieren müssen, wird durch das Kryptographie-Schema festgelegt.

### Vorteile und Anwendungsbeispiele

### Sicherung von Token gegen Verlust

Weiterhin können Token sehr leicht gesichert werden. Da Token lokal gespeichert werden, kann jeder Nutzer Sicherheitskopien seiner Token auf Diskette, Festplatte oder CD anlegen.

### Beispiel: Verlust von Token

Angenommen ein Peer hat Sicherheitskopien von Token angelegt. Aufgrund eines Datenfehlers verliert der Peer seine Kontodaten. Er hat nun zwar die Token gesichert aber keine Übersicht darüber, welche Token er bereits ausgegeben hat. Deshalb reicht er nun alle gesicherten Token zum Tokenaggregierungsprozess ein. Hier werden alle Token auf mehrfaches Ausgeben hin geprüft. Wenn ein Peer selber Token zur Aggregation einreicht, hat die Existenz von mehrfach ausgegebenen Token keine negativen Auswirkungen. Das Peer erhält nun für alle alle noch nicht ausgegebenen Token neue.

### Kredit

Peers können sich gegenseitig Kredite geben. Dazu schließen sie zunächst einen Kreditvertrag. Dieses Dokument wird von beiden Vertragsparteien unterzeichnet. Der kreditgebende Peer gibt den Empfänger in seinen Token an und signiert sie. Anschließend tauschen die Parteien die Token gegen eine Quittung aus. Die Quittung bestätigt, dass die Token erhalten wurden. Der Austausch kann direkt oder über einen dritten Peer abgewickelt werden. Der kreditnehmende Peer kann die erhaltenen Token im Tokenaggregationsprozess gegen neue, eigene Token eintauschen. Beim direkten Austausch von Token und Quittung kann das oben vorgestellte Verfahren zum vertrauenswürdigen Austausch von Dienst und Token verwendet werden. Zuerst werden die unsignierten Token gesendet und nach Erhalt der Quittung die dazugehörenden Signaturen. Es kann aber auch ein dritter Peer den Austausch unterstützen. Er erhält Quittung und Token und prüft, ob die Angaben korrekt sind. Dann sendet er jedem Kreditpartner den entsprechenden Teil zu. Für den dritten Peer haben die Token und die Quittung keinen Wert. Zwischen den Kreditparteien können jede Art von Rückzahlungsmodalitäten vereinbart werden, da die Rückzahlung über eine bestimmte Anzahl Token lautet. So ist es z.B. möglich, Zinsen und Ratenzahlungen zu vereinbaren.

Die Aggregationsfunktion kann völlig frei gewählt werden. Wenn z.B. fremde gegen eigene Token im Verhältnis 1:1 eigetauscht werden, können Token als virtuelle Währung benutzt werden. Mit dieser virtuellen Währung erwerben Peers nun Dienste im dezentralen Computernetzwerk. Den Preis für einen Dienst wird mit dem Diensterbringer individuell ausgehandelt. Die Bezahlung kann vor, nach oder während der Diensterbringung erfolgen. Für den letzten Fall werden die zu übersendenden Daten in Teile aufgeteilt. Für jeden gesendeten Teil bezahlt der beziehende Peer eine vorher bestimmte Anzahl von Token. Dies ermöglicht auch die Anwendung des Accountingsystems in File-Sharing-Applikationen, die auf Basis von Dateiteilen arbeiten. Hier kann jeder Teil von einem anderen Peer, gegen entsprechende Bezahlung in Token, bezogen werden.

Anderseits kann die Aggregationsfunktion auch in einem anderen Verhältnis fremde gegen eigene Token eintauschen. Heute sind viele lnternetanbindungen asymmetrisch, d.h. die Upload-Bandbreite ist deutlich geringer als die Download-Bandbreite. Dies ist z.B. bei T-DSL der Fall. Dadurch verursachte ein Upload von 1 MB Daten höhere Kosten für den Peer als ein entsprechender Download. Um dem Rechnung zu tragen, wird die Aggregationsfunktion so gewählt, dass man für x fremde Token eine Anzahl n größer x eigene Token erhält. Die Wahl dieser Funktion ist vollkommen frei. Auf diese Weise wird das Accounting zu einem Anreizsystem um der Peer-to-Peer-Gemeinschaft Ressourcen zur Verfügung zu stellen.

Der beziehende Peer hat die Möglichkeit im Token Nutzdaten anzugeben. Diese Nutzdaten können aufgrund der Signatur am Ende des Token nicht mehr verändert werden. Wie bereits erwähnt enthalten die Nutzdaten die Identifikation des Ziel-Peers. Weiterhin können hier Informationen über die Transaktion abgelegt werden. Beispiele sind die Beschreibung des geleisteten Diensts, z.B. Dateiname, etc. Außerdem können Daten über die Qualität der Dienstleistung hier eingefügt werden. Dies ist etwa die durchschnittliche Datenübertragungsrate oder die Wartezeit in der Warteschlage des leistenden Peers. Der leistende Peer nimmt nur Token an, die Angaben beinhalten, mit denen er einverstanden ist. Auf diese Weise kann das Accountingsystem auch als Nachweissystem für getätigte Transaktionen genutzt werden. Die Token fungieren hier als Quittungen. Welche Daten in den Token angegeben werden, hängt von der Anwendung ab, die das Accountingsystem nutzt, und kann außerdem individuell zwischen den Transaktionspartnern vereinbart werden.

### Beispiel eines Peer-to-Peer-File-Sharing-Scenarios

Ein Peer A fragt bei Peer B die Datei F an, die 10 Mbyte groß ist. In diesem Scenario werden alle Dateien in Teile von 1 Mbyte eingeteilt. Die Parteien einigen sich auf zwei Token pro Dateiteil. Dafür sendet B die Datei mit einer Übertragungsrate von mindestens 10 Kbyte pro Sekunde. Die Transaktion soll mittels des vertrauenswürdigen Abwicklungsprozesses (s.o.) abgewickelt werden. Peer A beginnt mit der Sendung der ersten beiden, nicht signierten, Token. Peer B sendet daraufhin den ersten Dateiteil. Peer B schickt daraufhin die Accountingdaten (Dateiname, Dateiteil, durchschnittliche Übertragungsrate) und Signatur des Token an Peer A. Peer A kontrolliert die Angaben. Sind die Angaben nicht korrekt, bricht Peer A die Leistung seines Diensts ab. Anderenfalls wird die Transaktion weiter durchgeführt. Am Ende der Transaktion hat Peer B so viele fremde Token gesammelt, dass er beschließt einen Tokenaggregationsprozess durchzuführen.

### Beispiel eines Scenarios zur gemeinsamen Nutzung von Rechenzeit

Eine Peer-to-Peer-Anwendung gestattet die Nutzung von verfügbarer Rechenzeit auf den Computern, die diese Anwendung gestartet haben. Um eine faire Nutzung der Rechenzeit zu gewährleisten, wird das Accountingsystem eingesetzt. Jeder Token entspricht einer bestimmten Rechenzeit. Teilnehmer können so gegen Token Rechenzeit auf anderen Computer kaufen. Ein Peer sendet also seine Rechenaufgabe zu einem anderen Peer. Nach Lösung der Aufgabe teilt der leistende Peer dem beziehenden Peer mit, wie viel Rechenzeit er zur Lösung benötigte. Um das Ergebnis der Berechung zu erhalten, muss nun der beziehende Peer die entsprechende Anzahl Token an den leistenden Peer senden.

ln ähnlicher Weise können Peers ihren Speicherplatz temporär vermieten. Token entsprechen hier einem Gegenwert von Speicherplatz pro Zeit. So könnte z.B. 10 MByte pro 24 Stunden ein Token kosten. Anwender können so Daten dezentral im Netzwerk sichern. Als Gegenleistung werden Token bezahlt.

Auf diese Weise kann das Accountingsystem kann zur Abrechnung von Ressourcennutzung wie Rechenzeit, Bandbreite und Speicherplatz genutzt werden.

Werden die Token mit Hilfe der Anwendungsidentifikation (siehe Abbildung 2) unterschieden, können über die Tokenagregationsfunktion auch Token unterschiedlicher Anwendungen zwischen den Anwendungen gehandelt werden. Der Umrechnungskurs wird in der Aggregationsfunktion festgelegt.

### Literatur:

| | |
|---|---|
| [Dingledine2001] | Dingledine, M. J. Freedman, D. Molnar: **Accountability;** In: *Peer-To-Peer: Harnessing the Power of Disruptive Technologies,* O'Reilly & Associates, Chapter 16, pp. 217 - 340, 1st edition, March 15, 2001. |
| [Shamir1979] | A. Shamir, **How to share a secret,** *Communications of the ACM* **22** (1979), 612-613 |
| [Vishnumurthy2003] | Vivek Vishnumurthy, Sangeeth Chandrakumar, Emin Gün Sirer: **KARMA: A Secure Economic Framework for Peer-to-Peer Resource Sharing;** Workshop on Economics on Peer-to-Peer Systems; 2003; *http:*//*www.sims.berkeley.edu*/*research*/*conferences*/*p2pecon*/*papers*/*s5-vishnumurthy.pdf* |
| [Zhou2000] | Lindong Zhou: **Secret Sharing;** Lecture Notes to CS 513 System Security at Cornell University; *http:*//*www.*cs.*cornell.edu*/*Courses*/*cs513*/*2002fa*/*L.SecretSharing.html* |

## Patentansprüche

1. Verfahren in der Datenverarbeitung zur Buchführung und Abrechnung von Ressourcen- und Dienstnutzung in verteilten, autonomen Computernetzwerken basierend auf Token und verteilter Kryptographie, wobei die Token eine eindeutige Identifikation besitzen, **dadurch gekennzeichnet, daß**
a) die Buchführung und Abrechnung dezentral erfolgt,
b) die Token auf einen bestimmten Teilnehmer ausgestellt werden und eine eindeutige Identifikation besitzen,
c) die Token nur vom Eigentümer gegen Ressourcen- oder Dienstnutzung eingetauscht werden dürfen,
d) ein Teilnehmer fremde Token gegen eigene Token bei Super-Peers eintauschen kann,
e) neue Token mit einem verteilten, geheimen privaten Schlüssel dezentral von mindestens einem Super-Peer signiert werden.

2. Verfahren nach Anspruch 1, **dadurch gekennzeichnet, dass** in Verfahrensschritt e) die Token von mehr als einem Super-Peer signiert werden.

3. Verfahren nach Anspruch 2 oder, **dadurch gekennzeichnet, dass** in Verfahrensschritt c)
a) Zunächst ein Teilnehmer die fremden Token an ein Super-Peer sendet, ,
b) die Anzahl der neu auszustellenden Token auf Basis der öffentlichen Aggregationsfunktion bestimmt wird
c) nun die neuen Token erstellt werden,
d) anschließend die neuen Token an eine Gruppe Super-Peer gesandt werden,
e) dann die Super-Peers die neuen Token mit dem verteilten privaten Schlüssel teilsignieren,
f) nun die Super-Peers die teilsignierten Token direkt an den Teilnehmer zurücksenden,
g) die Fertigstellung der Token der Teilnehmer übernimmt.

4. Verfahren nach einem der Ansprüche 1 bis 3, **dadurch gekennzeichnet, dass**
a) beim Versenden von Token zwischen Teilnehmern zuerst der unsignierte Token vom Teilnehmer versendet wird,
b) die Teilnehmersignatur des Token erst nach Erhalt der Gegenleistung von Teilnehmer versandt wird.

5. Verfahren nach einem der Ansprüche 1 bis 4, **dadurch gekennzeichnet, dass**
a) das mehrfache Verwenden von Token verhindert wird, indem Konten für jeden Teilnehmer auf Systemen anderer Teilnehmer geführt werden,
b) diese Konten aus einer Liste bestehen, in die die an den Kontoinhaber ausgegebenen Token eingetragen werden,
c) ein Token in der Liste markiert wird, sobald feststeht , in welcher Transaktion der Token verwendet werden soll,
d) ein Token aus der Liste erst gelöscht werden, wenn der Token gegen neue Token eingetauscht wurde.

6. Verfahren nach einem der Ansprüche 1 bis 5, **dadurch gekennzeichnet, dass** die Token Nutzdaten aufweisen.
